Europäisches Patentamt

European Patent Office

Office européen des brevets

(19)

(11) Veröffentlichungsnummer **0 012 447**
**B1**

(12) **EUROPÄISCHE PATENTSCHRIFT**

(45) Veröffentlichungstag der Patentschrift: **09.03.83**

(21) Anmeldenummer: **79105197.2**

(22) Anmeldetag: **14.12.79**

(51) Int. Cl.³: **F 16 C 33/10, F 16 C 33/66**

(54) Schmierstoffkreislauf für das Lager einer umlaufenden Welle.

(30) Priorität: **15.12.78 DE 2854298**

(43) Veröffentlichungstag der Anmeldung:
**25.06.80 Patentblatt 80/13**

(45) Bekanntmachung des Hinweises auf die Patenterteilung:
**09.03.83 Patentblatt 83/10**

(84) Benannte Vertragsstaaten:
**FR GB IT**

(56) Entgegenhaltungen:
**BE - A - 401 418**
**CH - A - 436 862**
**DE - A - 2 264 874**
**DE - A - 2 609 736**
**DE - C - 622 479**
**DE - C - 647 332**
**US - A - 1 705 281**
**US - A - 2 171 390**
**US - A - 3 645 592**
**US - A - 3 915 519**

(73) Patentinhaber: **Anschütz & Co. G.m.b.H.**
**Mecklenburger Strasse 32-36**
**D-2300 Kiel-Wik (DE)**

(72) Erfinder: **Andres, Helmut**
**Eichhofstrasse 24**
**D-2300 Kiel 1 (DE)**
Erfinder: **Fichtner, Karl-Heinz**
**Bernstorffweg 24**
**D-2301 Strande (DE)**
Erfinder: **Fischer, Hans-Siegfried**
**Masurenring 40B**
**D-2300 Kiel 14 (DE)**

(74) Vertreter: **Baumann, Eduard, Dipl.-Phys.**
**Postfach 1201 Sattlerstrasse 1**
**D-8011 Höhenkirchen/München (DE)**

Schmierstoffkreislauf für das Lager einer umlaufenden Welle

Die Erfindung bezieht sich auf einen Schmierstoffkreislauf der im Oberbegriff des Anspruchs 1 definierten Gattung.

Bei einem solchen Schmierstoffkreislauf ist ein Vagabundieren des Schmierstoffs vermindert oder ausgeschlossen und daher ist ein Schmierstoffverlust vermieden, so daß das Lager über eine sehr lange Betriebsdauer keiner Wartung bedarf. Solche Lager sind verschleißarm und zuverlässig, da sie über ihre ganze Lebensdauer ausreichend geschmiert werden. Auch läßt sich dabei erreichen, daß der Schmierstoff weitgehend in vorausberechenbarer Weise beschleunigungsunabhängig verteilt ist und daher den Massenmittelpunkt von Welle und Gehäuse in seiner Lage beläßt, was bei Kreiselgeräten wichtig ist. Da der Schmierstoff im Kreislauf durch den porösen Schmierstoffspeicher fließt, wird er laufend gefiltert, so daß an die Lagerstelle keine verschleißend wirkenden Verunreinigungen gelangen.

Bei einem bekannten Schmierstoffkreislauf dieser Gattung weist die den Schmierstoff vom Speicher zur Lagerfläche zurückführende Einrichtung einen Docht auf, der gegebenenfalls vom Speicher selbst gebildet werden kann und an der mit der Welle umlaufenden Fläche anliegt und diese daher laufend mit dem Schmierstoff bestreicht. Indessen enthält jeder Docht Staub und gegebenenfalls noch andere Verunreinigungen. Weitere Verunreinigungen enstehen durch den Abrieb, dem der Docht an der von ihm bestrichenen Fläche unterliegt. (DE—A—2609736).

In der deutschen Patentschrift DE—C—647332 ist eine Vorrichtung zum Schmieren von sich drehenden Teilen beschrieben, bei der das in den Keilräumen zwischen Lagerschale und Welle erzeugte Druckgefälle für die eigene Schmierung nicht benötigtes, überschüssiges Schmiermittel über radiale Durchführungen in der gleichen Welle nach Lieferkanälen drückt, welche das Schmiermittel zu weiter entfernt liegenden Schmierstellen führen. Ein poröser Schmierstoffspeicher und ein speziell ausgebildeter Spalt sind dort jedoch nicht vorgesehen. In der CH—A—436862 ist ein Gleitlager mit Schmiermittel für umlaufende Wellenzapfen vorgesehen, wobei in der Büchse zusätzlich eine Ölnut mit veränderlicher Tiefe hergestellt wird, die in Drehrichtung der Welle seichter wird. Auch dort ist jedoch kein Schmierstoffspeicher mit einer porösen Innenfläche sowie ein damit zusammenwirkender Spalt vorgesehen. Die US-Patentschrift US—A—3645592 betrifft ein Lager mit einem in einem Winkel angeordneten Kontakt, das einen porösen, durchlässigen Separator für eine Schmiermittelumwälzung aufweist. Das Schmiermittel wird von der zylindrischen Oberfläche des Separators in die Kugeltaschen des Separators zurückgeführt. Die Kugeln reiben gegen die Kugeltaschen, ein Spalt ist dort nicht vorgesehen, auch keine Welle.

Wenn auch die Reibung zwischen diesem Docht und der von ihm bestrichenen Fläche sehr gering ist und der Docht daher nur geringem Verschleiß unterliegt, so ist doch durch diesen Verschleiß die Lebensdauer des Lagers begrenzt.

Der Erfindung liegt die Aufgabe zugrunde, die den Schmierstoff vom Schmierstoffspeicher zur Lagerfläche zurückführende Einrichtung so auszugestalten, daß in ihr keine Reibung und daher auch kein Verschleiß wirksam wird.

Diese Aufgabe wird ausgehend vom Oberbegriff des Anspruchs 1 durch die im Kennzeichen des Anspruchs aufgeführten Merkmale gelöst. Die dynamische Pumpe saugt den Schmierstoff aus der den Spalt außen begrenzenden porösen Innenwandfläche des Schmierstoffspeichers heraus und läßt den Schmierstoff zur Lagerfläche zurückfließen, ohne daß dabei Reibung und Verschleiß entstehen.

Vorteilhafte Weiterbildungen der Erfindung sind in den Unteransprüchen aufgeführt.

Ausführungsbeispiele der Erfindung sind in den Zeichnungen veranschaulicht. In diesen zeigen:

Fig. 1 ein Blockschaltbild des Schmierstoffkreislaufes,

Fig. 2 einen Längsschnitt durch ein Gleitlager mit der vorstehend erläuterten Ausgestaltung,

Fig. 3 einen Längsschnitt durch ein ähnliches Gleitlager, das mit einem handelsüblichen Sinterlager versehen ist,

Fig. 4 eine schaubildliche Schnittdarstellung durch ein Kugellager mit der vorstehend erläuterten Ausgestaltung,

Fig. 5 einen Längsschnitt durch das in Fig. 4 gezeigte Kugellager,

Fig. 6 eine schaubildliche Schnittansicht eines Kugellagers, das in der oben erläuterten Weise ausgestaltet ist und einen losen äusseren Laufring hat,

Fig. 7 einen Längsschnitt des in Fig. 6 gezeigten Kugellagers und

Fig. 8 eine teilweise Seitenansicht des in Fig. 2 gezeigten Lagers in Richtung der Pfeile 8 betrachtet, zur Darstellung des Spaltes.

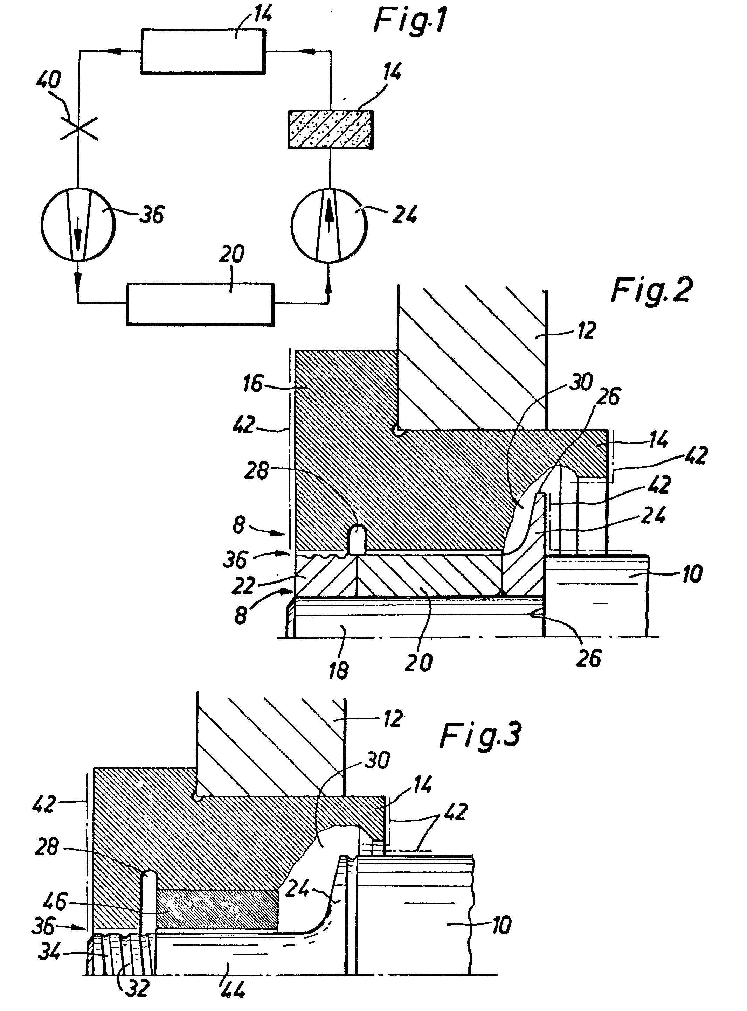

Das in Fig. 2 gezeigte Gleitlager einer waagerechten Welle 10 dient dazu, das linke Ende dieser Welle in einer lotrechten Gehäusewand 12 zu lagern. Diese hat einen runden Ausschnitt, durch den die Welle hindurchtritt, und der eine die Welle umgebende Buchse 14 enthält, die einen seitlich an der Gehäusewand 12 anliegenden Flansch 16 hat. Auf einem Endzapfen 18 der Welle 10 sind mit Festsitz eine Lagerbuchse 20, ein Ring 22 von gleichem Aussendurchmesser und eine Schleuderscheibe 24 aufgepasst, die aussen eine Schneide 26 von wesentlich grösserem Aussendurchmesser als die Welle 10 bildet. Die drei Maschinenteile 20 bis 24 liegen spielraumfrei aneinander und an der Schulter 26 der Welle an und die freie Stirnseite des Ringes 22 liegt in derselben Querebene wie die freie Stirnfläche des Flansches 16.

Die Buchse 14 besteht aus einem festen porösen und saugfähigen Stoff, etwa einem gesinterten Stoff, zum Beispiel Metall. Keramik oder Kunststoff und hat innen eine flache Ringnut 28 gegenüber der Fuge zwischen dem Ring 22 und der Lagerbuchse 20 und eine tiefe Ringnut 30, in die die Schleuderscheibe 24 hineinragt, ohne jedoch die Wandung der Ringnut 30 zu berühren.

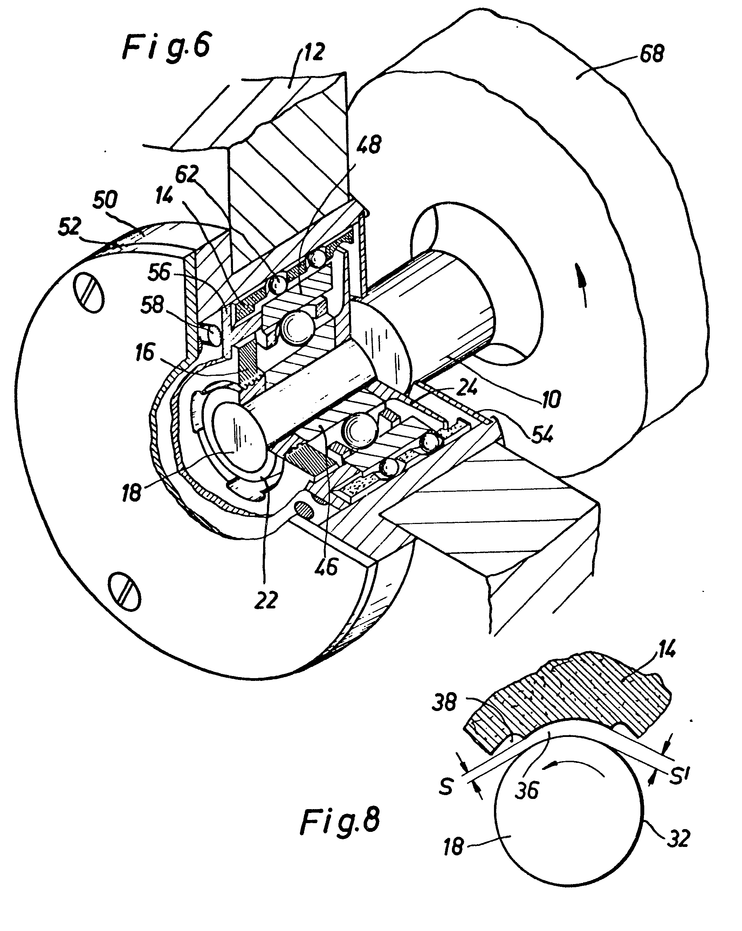

Die Umfangsfläche 32 des Ringes 22 hat eine schraubenförmige Nut 34, Fig. 3, und bildet mit der inneren Umfangsfläche der Buchse 14 einen ringförmigen Spalt 36. Dieser ist in der aus Fig. 8 ersichtlichen Weise profiliert. Er ist also durch achsparallele Nuten 38 in der Innenwand der Buchse 14 zu Wirbelkammern erweitert. Beim dargestellten Ausführungsbeispiel sind drei solcher Nuten über den Umfang der Buchseninnenfläche verteilt, doch kann die Anzahl beliebig vergrössert oder verringert werden.

Zwischen zwei benachbarten Nuten 38 verjüngt sich der Spalt 36 in der durch den Pfeil in Fig. 8 angegebenen Umlaufrichtung der Welle 10.

Die Buchse 14 mit ihrem Flansch 16 ist mit einem Schmierstoff getränkt und bildet einen Schmierstoffspeicher. Auch das Innere des Lagers, also der Spalt 36 und die Nuten 28 und 30 sind mit dem Schmierstoff gefüllt.

Beim Umlauf der Welle 10 nimmt diese den Schmierstoff mit und erzeugt dadurch im Spalt 36 einen starken Strom. Da sich aber der Querschnitt dieses Stromes verjüngt, verringert sich der Druck in dem Spalt. Es hat sich herausgestellt, dass eine solche Druckverminderung auch dann eintritt, wenn der Spalt 36 eine über seine ganze Länge hin gleich grosse Weite aufweist, vorausgesetzt, dass die Kammern 38 hinreichend gross bemessen sind.

Durch die Saugwirkung wird aus den Poren der Innenfläche des von der Buchse 14 gebildeten Speichers Schmierstoff herausgesaugt. Dieser gelangt in die Nut 28 und von dort auf die Lagerfläche, die vom Umfang der Buchse 20 gebildet wird. Läuft die Welle 10 in der durch den Pfeil in Fig. 8 gezeigten Richtung um, dann wählt man eine solche Steigung der Nut 34, dass diese ein Rechtsgewinde darstellt, wie in Fig. 3 gezeigt. Da sich die Umfangsfläche 32 in der Richtung des Pfeiles der Fig. 8 schneller bewegt als der im Spalt strömende Schmierstoff, sucht dieser zurückzubleiben und strömt daher in der Nut 34 in Richtung auf die Lagerbuchse 20 zu. Auf dieser wandert der Schmierstofffilm mit Bezug auf Fig. 2 nach rechts, weil er von links ständig gespeist wird, und gelangt schliesslich auf die Aussenfläche der Schleuderscheibe 24 und wird von deren Schneide 26 in Form von Tröpfschen abgeschleudert, die auf die Innenfläche der Nut gelangen.

Vorzugsweise hat der von der Buchse 14 und ihrem Flansch 16 gebildete Speicher eine nicht poröse Oberfläche, die von einer aufgebrachten Schicht gebildet werden kann und lediglich die den Ring 22 umgebende Innenfläche des Flansches 16 und die Innenfläche der Nut 30 freilässt. Der von der Schleuderscheibe abgeschleuderte Schmierstoff wird daher von der porösen Innenfläche der Nut 30 aufgesaugt.

Es entsteht also ein Schmierstoffkreislauf, der in Fig. 1 schematisch dargestellt ist und die geschmierte, mit der Welle 10 umlaufende Lagerfläche (Umfangsfläche der Lagerbuchse 20), die sich daran anschliessende Fläche der mit der Welle 10 umlaufenden Schleuderscheibe 24, den den Umfang der Schleuderscheibe 24 umgebenden und von der Buchse 14 gebildeten Schmierstoffspeicher und die den Schmierstoff von diesem zur Lagerfläche zurückführende Einrichtung umfasst. Diese Einrichtung wird von dem Spalt 36 gebildet, der einerseits von der mit der Welle 10 umlaufenden, sich an die Lagerfläche anschliessenden Fläche 32 und andererseits von der porösen Innenfläche des Schmierstoffspeichers begrenzt ist. Da dieser Schmierstoffspeicher in Gestalt der Buchse 14 vom Ring 22 durch den Spalt 36 und von der Lagerbuchse 20 durch den Schmierstofffilm getrennt ist, besteht keine Berührung zwischen diesem Speicher und der Welle 10, 18. Da der Schmierstoff beim Durchströmen des Speichers 14, 16 laufend gefiltert wird und er daher keine Verunreinigungen enthält, ergibt sich eine praktisch unbegrenzte Lebensdauer.

Der Schmierstoffkreislauf wird also durch den Umlauf der Welle ohne unmittelbare mechanische Berührung in Gang gesetzt und in Betrieb gehalten, wobei die Schleuderscheibe 24 und der Spalt 36 als Pumpen wirken. Dabei empfiehlt es sich, S' doppelt so gross wie S zu bemessen, zum Beispiel mit 0,035 mm, wenn S 0,07 mm beträgt.

Die Stärke des umlaufenden Schmierstoffstroms kann man bei gegebenen Abmessungen und gegebener Drehzahl dadurch unterschiedlich einstellen, dass man die die Fläche 32 umgebende poröse Innenfläche des Schmierstoffspeichers 14, 16 derart ausgestaltet, dass sie als Drossel für den Schmierstoffstrom wirkt. Zu diesem Zweck kann man diese Fläche durch Auftragen eines entsprechenden Überzuges entweder verkleinern oder den Grad der Porosität herabsetzen. Das ist schematisch in Fig. 1 durch die Drossel 40 angedeutet.

Mangels besonderer Vorkehrungen könnte dadurch ein geringer Schmierstoffverlust eintreten, dass der Schmierstoff von der Nut 30 und dem Spalt 36 aus nach aussen und von der Schneide 26 aus auf die Aussenseite der Schleuderscheibe 24 und der Welle 10 kriecht. Um das zu verhindern empfiehlt es sich, die Flächen, auf denen der Schmierstoff aus dem Lager herauskriechen könnte, mit abstossenden Schichten zu versehen, die in Fig. 2 durch die strichpunktierten Linien 42 angedeutet sind.

Die in Fig. 3 gezeigte Ausführungsform unterscheidet sich von derjenigen der Fig. 2 dadurch, das dort die Elemente 18 bis 24 aus einem Stück bestehen, das den Endzapfen 44 bildet, und dass eine handelsübliche Lagerbuchse 46 mit Festsitz in die Buchse 14 zwischen die Nuten 28 und 30 eingepasst ist und mit dem Endzapfen 44 die Lagerfläche für die Welle 10 bildet.

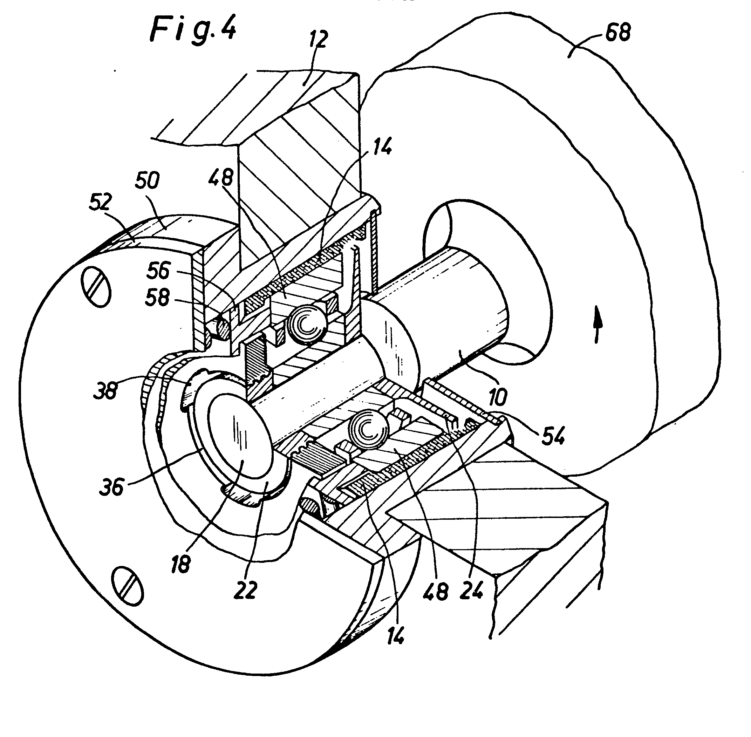

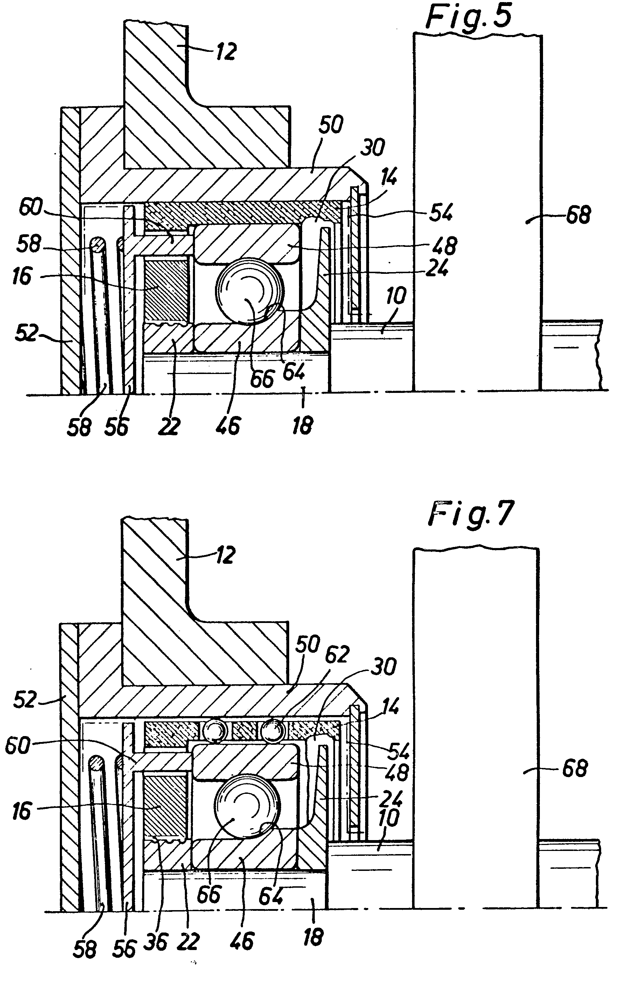

Die in den Fig. 4 und 5 gezeigte Ausführungsform stimmt darin mit der zuvor beschriebenen überein, dass die Welle 10 auf ihrem Endzapfen 18 die Schleuderscheibe 24 und einen mit einer schraubenförmigen Nut versehenen Ring 22 trägt und von einer den Speicher bildenden, aus porösem Werkstoff bestehenden Buchse 14 mit Flansch 16 umgeben ist, die von einer Gehäusewand 12 getragen wird. Abweichend von der oben beschriebenen Ausführungsform handelt es sich jedoch um ein Kugellager, dessen innerer Laufring 46 an die Stelle der Lagerbuchse 20 der Fig. 1 gesetzt ist, und dessen äusserer Laufring 48 von der porösen Buchse 14 getragen wird. Zwischen dieser und der Gehäusewand 12 befindet sich eine Buchse 50, die mit Festsitz in die Gehäusewand 12 eingepasst ist und links einen auf ihr befestigten Deckel 52 trägt, der dort das Lager abschliesst. Rechts trägt die Buchse 50 eine zum Deckel 52 parallele Ringscheibe 54, über deren Aussenrand sie umgebördelt ist. Diese Ringscheibe umgibt mit Spielraum die Welle 10. Zwischen dem Deckel 52 und dem Flansch 16 befindet sich eine parallel zu beiden angeordnete Scheibe 56, die mit dem Deckel 52 einen Raum begrenzt, der eine vorgespannte Schraubendruckfeder 58 aufnimmt. Die Scheibe 56 hat auf ihrer rechten Seite einen Kranz von achsparallelen Zapfen 60, die mit Spielraum durch Löcher des Flansches 16 hindurchgehen und sich an die linke Seitenwand des äusseren Laufringes 48 des Kugellagers anlegen. Dieser ist spielraumfrei in die Buchse 14 eingepasst, welche die zwischen dem Gehäuse 12 und der Welle 10 wirksam werdenden Querkräfte zwischen der Buchse 50 und dem äusseren Laufring 48 übertragen muss und daher aus einem entsprechend starren festen Werkstoff, etwa einem Sintermetall besteht.

Der Innenlaufring 46 des Kugellagers hat eine Schulter 64, an welche die Kugeln 66 des Kugellagers durch die vorgespannte Feder 58, die Scheibe 56, die Zapfen 60 und den äusseren Kugellagerring 48 angedrückt werden.

Die Welle 10 trägt einen Kreiselläufer 68. Die Scheibe 56 mit den Zapfen 60 bildet ein Druckstück, das durch die Löcher des Flansches 16 hindurchreicht und auf den äusseren Laufring 48 drückt. Die Schulter 64 hat einen grösseren Durchmesser als die den Spalt 36 innen begrenzende Fläche des Ringes 22.

Während bei dieser Ausführungsform die den Schmierstoffspeicher bildende Buchse 14 mechanischen Kräften unterliegt und daher aus einem entsprechend festen Werkstoff bestehen muss, zeichnet sich die in den Fig. 6 und 7 dargestellte Ausführungsform dadurch aus, dass dort die Buchse 14 mit ihrem Flansch 16 von mechanischen Kräften entlastet ist und daher aus einem porösen Werkstoff geringer Festigkeit, etwa Sinterkunststoff oder Hartgewebe bestehen kann. Das ist dadurch erreicht, dass die Buchse 14 zwischen dem äusseren Lagerring 48 und der Buchse 50 mit zwei Kränzen von Löchern versehen ist, in die Kraft übertragende Körper, etwa Kugeln 62, eingesetzt sind, die spielraumfrei an dem Aussenlaufring 48 und der Buchse 50 anliegen. Die Buchse 14 bildet also gewissermassen einen Käfig für die Kugeln 62.

Die Kugeln 12 können unter radialer Vorspannung stehen, was den Vorteil bietet, dass das Lager völlig spielraumfrei arbeitet. Trotz dieser Spielraumfreiheit braucht die Feder 58 nur eine sehr geringe Kraft auszuüben, um den Spielraum in axialer Richtung aufzunehmen.

Im übrigen stimmt die Ausführungsform der Fig. 6 und 7 mit derjenigen der Fig. 4 und 5 überein. Übereinstimmung auch mit der Ausführungsform der Fig. 2 und 3 besteht hinsichtlich des Schmierstoffkreislaufs, insbesondere der Einrichtung zum Zurückführen des Schmierstoffes vom Speicher zur Lagerfläche. Die Scheibe 54 dient zum Abfangen von Schmierstoffspritzern.

Bei sämtlichen Ausführungsformen nach den Fig. 2 bis 7 wird der Schmierstoff in vorausbestimmbarer und beschleunigungsunabhängiger Weise verteilt, so dass er nicht vagabundiert und daher den Massenmittelpunkt von Welle und Gehäuse in seiner Lage belässt, das Lager gründlich durchspült und Verunreinigungen beseitigt.

Die beschriebenen Ausführungsbeispiele können in mannigfacher Weise abgeändert werden. So besteht die Möglichkeit, den Schmierstoffspeicher durch eine poröse Füllung eines Kranzes axialer Bohrungen des Gehäuses und der Buchse 50 zu bilden wobei diese Füllungen an dem porösen Flansch 16 anliegen und mit diesem den Förderkreis für den Schmierstoff bilden. Auch besteht die Möglichkeit, die den Spalt begrenzenden Flächen kegelförmig zu gestalten oder sogar als ebene lotrecht zur Welle verlaufende parallele Flächen auszubilden, wenngleich die in den Zeichnungen dargestellte Ausbildung zu bevorzugen ist.

Schliesslich können Teile, die in den Zeichnungen als getrennte Teile dargestellt sind, zum Beispiel die Teile 22 und 46 in Fig. 5, aus einem einzigen Stück bestehen.

**Patentansprüche**

1. Schmierstoffkreislauf für das Lager einer umlaufenden Welle (10, 18), der die geschmierte, mit der Welle (10, 18) umlaufende Lagerfläche (44, 46) die sich daran anschließende Fläche einer mit der Welle umlaufenden Schleuderscheibe (24), einen den Umfang der Schleuderscheibe (24) umgebenden Schmierstoffspeicher (14, 16) aus porösem Werkstoff und eine den Schmierstoff von diesem zur Lagerfläche zurückführende Einrichtung umfaßt, die eine mit der Welle (10, 18) umlaufende, sich an die Lagerfläche (44, 46) anschließende Umfangsfläche (32) mit mindestens einer schraubenförmigen Fördernut (34) aufweist, dadurch gekennzeichnet, daß die den Schmierstoff vom Schmierstoffspeicher (14, 16) zurückführende Einrichtung als dynamische Pumpe ausgebildet ist und einen Spalt (36) aufweist, der einerseits von der mit der Welle (10, 18) umlaufenden Umfangsfläche (32) und andererseits von einer porösen Innenwandfläche des an dieser Stelle nahe an der Welle — ohne diese zu berühren — angeordneten und diese umgebenden Schmierstoffspeichers (14, 16) begrenzt ist, wobei sich der Spalt (36) in Wellenumlaufrichtung verjüngt und/oder an einer Stelle bzw. an mehreren über seinen Umfang verteilten Stellen zu Kammern (38) erweitert ist.

2. Schmierstoffkreislauf nach Anspruch 1 für Wälzlager, wobei der Schmierstoffspeicher (14) den äußeren Lagerlaufring (48) mantelförmig umgibt und ihn einseitig, einen Flansch bildend übergreift und seinerseits von einem Lagergehäuse (12) umgeben ist, dadurch gekennzeichnet, daß der Schmierstoffspeicher (14) zwischen dem äußeren Lagerlaufring (48) und dem Lagergehäuse (12) als Käfig für Wälzkörper (62) dient, die den äußeren Lagerlaufring gegen das Lagergehäuse abstüzen (Fig. 6).

3. Schmierstoffkreislauf nach Anspruch 2, dadurch gekennzeichnet, daß eine am Lagergehäuse (12, 50, 52) abgestützte Feder (58) auf ein zwischen ihr und dem Flansch (16) des Schmiermittelspeichers (14) befindliches Druckstück (56, 60) wirkt, das durch Löcher des Flansches (16) hindurchreicht und auf den äußeren Laufring (48) des Kugellagers drückt, dessen Innenlaufring (46) nur mit einer an den Kugeln (66) anliegenden Schulter (64) versehen ist, die einen größeren Durchmesser hat, als die den Spalt (36) innen begrenzende Umfangsfläche (32) (Fig. 7).

4. Schmierstoffkreislauf nach einem der vorhergehenden Ansprüche, dadurch gekennzeichnet, daß die Oberfläche des Schmierstoffspeichers (14, 16) mit Ausnahme der Außenfläche des Spaltes (36) und der die Schleuderscheibe (24) umgebenden Fläche nicht porös ist.

### Revendications

1. Circuit de lubrifiant pour le palier d'un arbre (10, 18) comprenant la surface de palier (44, 46) lubrifiée, tournant avec l'arbre (10, 18), la surface d'un disque centrifuge (24) qui y fait suite et tourne avec l'arbre, un réservoir de lubrifiant (14, 16) d'un matériau poreux, qui entoure la circonférence du disque centrifuge (24) ainsi qu'un dispositif ramenant le lubrifiant du réservoir à la surface de palier, dispositif qui présente une surface cylindrique (32) tournant avec l'arbre (10, 18) et faisant suite à la surface de palier (44, 46), qui présente au moins une rainure transporteuse hélicoïdale (34), circuit de lubrifiant caractérisé en ce que le dispositif ramenant le lubrifiant du réservoir (14, 16) est conçue en tant que pompe dynamique et qu'il présente une fente (36) limitée d'une part par la surface cylindrique (32) tournant avec l'arbre (10, 18) et d'autre part par une face intérieure poreuse du réservoir de lubrifiant (14, 16) disposé à ce niveau près de l'arbre qu'il entoure sans pour autant le toucher, cette fente (36) s'amincissant dans le sens de rotation de l'arbre et/ou s'élargissant en un ou en plusieurs points de son pourtour pour former des chambres (38).

2. Circuit de lubrifiant selon la revendication 1 destiné à des roulements, le réservoir de lubrifiant (14) enveloppant la bague extérieure (48) et la surplombant d'un côté de sorte à former un plateau, réservoir étant de son côté entouré d'un carter de palier (12), caractérisé en ce que le réservoir de lubrifiant (14), entre la bague extérieure (48) et le carter de palier (12), sert de cage pour des éléments de roulement (62) qui appuient la bague extérieure contre le carter de palier (12).

3. Circuit de lubrifiant selon la revendication 2, caractérisé en ce qu'un ressort (58) appuyé contre le carter de palier (12, 50, 52) agit sur un élément de pression (56, 60) se trouvant entre lui et le plateau (16) du réservoir (14), passant par les alésages du plateau (16) et appuyant sur la bague extérieure (48) du roulement à billes dont la bague intérieure (46) n'est pourvue que d'un épaulement (64) appliqué contre les billes (66), épaulement ayant un diamètre supérieur à la surface cylindrique (32) qui constitue la limite intérieure de la fente (36) (Fig. 7).

4. Circuit de lubrifiant selon l'une des revendications ci-dessus, caractérisé en ce que la surface du réservoir de lubrifiant (14, 16), à l'exception de la face extérieure de la fente (36) et de la surface entourant le disque centrifuge (24), n'est pas poreuse.

### Claims

1. Lubricant circuit for the bearing of a rotary shaft (10, 18), comprising the lubricated bearing surface (44, 46) rotating with the shaft (10, 18), the adjoining surface of a lubricant splasher (24) rotating with the shaft, a lubricant source (14, 16) of porous material surrounding the periphery of the lubricant splasher (24), and means returning the lubricant from the lubricant source to the bearing surface, said means including a circumferential surface (32) rotating with the shaft (10, 18) and adjoining the bearing surface (44, 46) and having at least one helical supply groove (34), characterized in that said means returning the lubricant from the lubricant source (14, 16) is designed as a dynamic pump and is provided with a gap (36) defined on one side by the circumferential surface (32) rotating with the shaft (10, 18) and on the other side by a porous inner wall surface of the lubricant source (14, 16) which at this point is disposed in close proximity to and surrounding the shaft — without contacting the same —, wherein the gap (36) tapers in the direction of rotation of the shaft and/or at one location or, respectively, at a plurality of circumferentially distributed locations is expanded to form chambers (38).

2. Lubricant circuit according to claim 1 for anti-friction bearings, wherein the lubricant source (14) surrounds the outer bearing race (48) like an envelope and overlaps the same on one side, thereby forming a flange, and wherein the lubricant source in its turn is surrounded by a bearing housing (12), characterized in that the lubricant source (14) between the outer bearing race (48) and the bearing housing (12) functions as a cage for rolling elements (62) which support the outer bearing race relative to the bearing housing (Fig. 6).

3. Lubricant circuit according to claim 2, characterized in that a spring (58) supported at the bearing housing (12, 50, 52) acts on a thrust piece (56, 60) disposed between said spring and the flange (16) of the lubricant source (14), said thrust piece protruding through holes formed in the flange (16) and applying pressure on the outer bearing race (48) of the antifriction bearing whose inner bearing race (46) is provided only with a shoulder (64) in engagement with the balls (66), said shoulder having a larger diameter than the circumferential surface (32) inwardly defining the gap (36) (Fig. 7).

4. Lubricant circuit according to any of the preceding claims, characterized in that the surface of the lubricant source (14, 16), with the exception of the outer surface of the gap (36) and the surface surrounding the lubricant splasher (24), is non-porous.

0 012 447

Fig.1

Fig.2

Fig.3

Fig.4

0 012 447

*Fig.5*

*Fig.7*

3

**Fig.6**

**Fig.8**